**Europäisches Patentamt**

**European Patent Office**

**Office européen des brevets**

(11) Veröffentlichungsnummer: **0 178 517**
**B1**

## EUROPÄISCHE PATENTSCHRIFT

(45) Veröffentlichungstag der Patentschrift:
**07.12.88**

(21) Anmeldenummer: **85112330.7**

(22) Anmeldetag: **28.09.85**

(51) Int. Cl.⁴: **C 01 B 25/18**

(54) **Verfahren zur Reduktion von Eisen und Vanadium in phosphorsaurer Lösung.**

(30) Priorität: **15.10.84 DE 3437684**

(43) Veröffentlichungstag der Anmeldung:
**23.04.86 Patentblatt 86/17**

(45) Bekanntmachung des Hinweises auf die Patenterteilung:
**07.12.88 Patentblatt 88/49**

(84) Benannte Vertragsstaaten:
**BE FR GB NL**

(56) Entgegenhaltungen:
**EP-A- 0 053 694**
**FR-A- 1 191 558**
**US-A- 3 421 845**
**US-A- 4 374 805**

(73) Patentinhaber: **HOECHST AKTIENGESELLSCHAFT,**
**Postfach 80 03 20, D-6230 Frankfurt am Main 80 (DE)**

(72) Erfinder: **Ressel, Herbert, Dr., Am Kapellenbusch 29,**
**D-5042 Erftstadt (DE)**
Erfinder: **Haas, Hans, Dr., Bünnagelring 17,**
**D-5357 Swisttal (DE)**
Erfinder: **Krause, Johannes, Dr., Gernotstrasse 5,**
**D-5030 Hürth (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung betrifft ein Verfahren zur Reduktion von Eisen und Vanadium in phosphorsaurer Lösung, insbesondere in Nassverfahrensphosphorsäure, mit Hilfe eines Reduktionsmittels.

Es ist seit langem bekannt, Eisen und Vanadium in phosphorsaurer Lösung zu reduzieren. Als Reduktionsmittel wurden hierbei die für solche Zwecke üblichen Stoffe eingesetzt, wie z.B. Eisen-, Aluminium- oder Zinkpulver, Eisen(II)-Salze, Schwefelwasserstoff, Sulfide, Sulfite, Dithionite oder Hydroxymethansulfinate (DE-A-1 065 388, DE-A-1 567 619, DE-A-2 528 895, US-A- 3 421 845).

Die Nachteile dieser Mittel sind u.a., dass durch sie grössere Mengen fremder Kat- und Anionen in die phosphorsaure Lösung eingebracht werden, dass ihre Umsetzung u.U. mit der Entwicklung störender Gase verbunden ist, wie beispielsweise der von Wasserstoff, $H_2S$ oder $SO_2$, und dass sich die bekannten Verfahren nicht kontinuierlich durchführen lassen.

Aufgabe der vorliegenden Erfindung war es, einen Weg zu suchen, der diese Nachteile umgeht.

Überraschenderweise wurde nun gefunden, dass sich diese Aufgabe in einfacher Art und Weise lösen lässt, wenn man die eisen- und vanadiumhaltige phosphorsaure Lösung mit körnigem Ferrophosphor als Reduktionsmittel zur Reaktion bringt, vorzugsweise in einer Korngrösse von 1 bis 10 mm.

Vorzugsweise wird Ferrophosphor eingesetzt, der auf eine Korngrösse von 1 bis 10 mm gebrochen wurde. Geringe Mengen an feinteiligem Material, etwa bis zu 10%, die beim Brechen zwangsläufig anfallen, stören dabei nicht und brauchen nicht abgesiebt zu werden.

Ein besonderer Vorteil des neuen Verfahrens liegt in der Möglichkeit, die Reduktion kontinuierlich durchzuführen, indem man die phosphorsaure Lösung einem um seine Querachse rotierenden Reaktor, der zum Teil – beispielsweise etwa zur Hälfte – mit dem körnigen Ferrophosphor gefüllt ist, kontinuierlich zu- und nach der Umsetzung die Lösung aus diesem Reaktor abführt. Da in dem rotierenden Reaktor sich die Ferrophosphorteilchen aneinanderreiben, bildet sich im Verlaufe der Umsetzung in geringem Umfang eine gewisse Menge an feinteiligem Ferrophosphor, der mit der abfliessenden Lösung aus dem Reaktor ausgetragen wird. Es empfiehlt sich daher, die Lösung aus dem Reaktor in einen Behälter abzuführen, in welchen man den feinteiligen Ferrophosphor nachreagieren und sich absetzen lässt. Den bei der Reaktion verbrauchten Ferrophosphor ergänzt man zweckmässigerweise im gleichen Umfang.

Als für die Reaktion günstige Temperaturen haben sich solche oberhalb 70 °C, vorzugsweise solche zwischen 80 und 95 °C erwiesen.

Die Reaktion des Ferrophosphors in eisen- und vanadiumhaltigen phosphorsauren Lösungen war für den Fachmann völlig überraschend, da Ferrophosphor in reiner thermischer Phosphorsäure nur eine sehr geringe Reaktivität zeigt.

Ferner war nicht vorhersehbar, dass bei der Reaktion von Ferrophosphor mit Phosphorsäure keine nennenswerten Entwicklungen von Wasserstoff oder Phosphorwasserstoff zu verzeichnen sein würden.

Untersuchungen mit Nassverfahrensphosphorsäure haben ergeben, dass bei Durchführung der Reduktion in Festbettreaktoren, beispielsweise in mit Ferrophosphor gefüllten Kolonnen, die Umsetzung relativ bald zum Erliegen kommt. Ursache hierfür ist, dass Nassverfahrensphosphorsäuren in Abhängigkeit von der Herkunft der Phosphaterze aus denen sie gewonnen wurden, mehr oder weniger hohe Gehalte an Titan als Verunreinigung aufweisen, so dass es auf der Oberfläche der Ferrophosphorteilchen zur Ausbildung von Verkrustungen kommt, die schwerlösliches K-Na-Ti-Phosphat enthalten. Durch den erfindungsgemässen Einsatz des Ferrophosphors in körniger Form und Durchführung der Reduktion in einem rotierenden Reaktor werden die Verkrustungen jedoch laufend zerstört und die Oberfläche der Ferrophosphorteilchen ständig erneuert. Gleichzeitig wird verhindert, dass sich im Ferrophosphorbett Kanäle ausbilden können, durch welche die Lösung ohne zu reagieren hindurchfliessen könnte.

Der in Form des Ferrophosphors als Reduktionsmittel an der Reduktion teilnehmende Phosphor liefert pro Mol Phosphor praktisch 5 Reduktionsäquivalente, wobei er selbst willkommenerweise weitgehend zu Phosphat oxidiert wird, das kein störendes Nebenprodukt darstellt. Entsprechend der hohen Redoxäquivalente verringert sich die Menge an Eisen, die zur Reduktion eingesetzt werden muss.

Ein weiterer Vorteil des erfindungsgemässen Verfahrens ist, dass damit eine Verwendungsmöglichkeit des bei der elektrothermischen Phosphorgewinnung zwangsweise anfallenden Ferrophosphor gefunden wurde, insbesondere auch für den als minderwertig angesehenen, mit relativ hohen Siliciumgehalten, beispielsweise solchen von 3–8 Gew.-% Si, die überraschenderweise eine höhere Reaktivität zeigen als siliciumarmer Ferrophosphor. Ausser $Fe^{3+}$ und $V^{5+}$ lassen sich nach dem erfindungsgemässen Verfahren auch andere höherwertige Schwermetallionen, wie $U^{6+}$ oder $Cr^{6+}$, reduzieren.

Das Prinzip einer zur Durchführung des erfindungsgemässen Verfahrens besonders geeigneten Vorrichtung ist beispielsweise in der nachfolgenden Zeichnung verdeutlicht. Diese Vorrichtung besteht aus einer um ihre Querachse drehbar angeordnete Trommel 1, die zum Teil – etwa bis zur Hälfte – mit körnigem Ferrophosphor gefüllt und mit Zuführungen für den Ferrophosphor 2 sowie für ein Inertgas 5, wie z.B. Stickstoff, und einen Ablauf 7 für das Reaktionsprodukt versehen ist.

Vorteilhafte Ausgestaltungen dieser Vorrichtung bestehen z.B. darin, dass in der Trommel 1 mehrere Schikanen 6 eingebaut sind, welche den Ferrophosphor während des Trommelumlaufs nach oben transportieren und durch die phosphorsaure Lösung zurückfallen lassen,

dass die Zuführungen 2, 4 und 5 über eine Stopfschnecke 3 mit der Trommel 1 verbunden sind,

dass der Ablauf 7 als ein hochgestelltes, feststehendes Überlaufrohr ausgebildet ist, das im oberen Teil der Trommel 1 endet, wodurch das Reaktionsvolumen völlig ausgenutzt und die Verweilzeit der phosphorsauren Lösung in der Trommel 1 verlängert werden kann,

dass der Zuführung 2 für die phosphorsaure Lösung ein – nicht gezeichneter – Wärmeaustauscher zum Aufheizen der Lösung vorgeschlatet ist,

dass die Trommel 1 über ein Kettenrad 8 mit einem in der Drehzahl regulierbaren Getriebemotor verbunden ist, womit die für die Reaktion optimale Drehzahl, vorwiegend 0,2–4,0 UpM, eingestellt werden kann, und

dass die Trommel 1 auf einer Wiegeeinrichtung 9 steht, mit deren Hilfe der Verbrauch an Ferrophosphor ermittelt werden kann, welcher im entsprechenden Masse ergänzt wird.

Vorteilhafterweise ist an den Ablauf 7 ein mit einem Rührwerk 11 versehener Behälter 10 angeschlossen, der dazu dient, den aus der Trommel 1 mit der Lösung ausgeschwemmten feinteiligen Ferrophosphor nachreagieren zu lassen, welcher sich im geringen Umfang während des Brechens des Ferrophosphors und während der Umsetzung in der Trommel gebildet hat. Dieser Behälter 10 besteht in seiner unteren Hälfte aus einen unten geschlossenen Zylinder, der oben über einen konisch geformten Zwischenteil mit einem oben geschlossenen weiteren Zylinder verbunden ist, welcher einen grösseren Durchmesser als der untere Zylinder besitzt, wobei der untere Zylinder an seinem unteren Ende mit dem Ablauf 7 verbunden und der obere Zylinder an seinem oberen Ende mit einem Ausflussrohr 12 versehen ist, das in einem mit einem Auslauf 14 versehenen geschlossenen Sammelgefäss 13 mündet.

Zweckmässigerweise sind jeweils am Kopf des Behälters 10 und des Sammelgefässes 13 ebenfalls Zuführungen 15 und 16 für das Inertgas angebracht.

Die oben beschriebene Ausführungsform des Behälters 10 ermöglicht es, dass, im oberen Teil mit grösserem Durchmesser, die mitgerissenen Ferrophosphorteilchen sedimentieren und dann im unteren schmäleren Teil nachreagieren können, wobei sie durch das an die Wandung angepasste Rührwerk 11 in Bewegung gehalten werden.

Zusammen mit dem feinteiligen Ferrophosphor werden aus der Trommel 1 auch die bei der Umsetzung entstandenen und abgeriebenen Verkrustungen des körnigen Ferrophosphors ausgeschwemmt, so dass die phosphorsaure Lösung ohne Zwischenfiltration direkt weiterverarbeitet, d.h. in erster Linie neutralisiert werden kann.

Erstaunlicherweise tritt auch bei eventuell in die Neutralisation eingeschleppten feinstteiligem Ferrophosphor selbst im stark alkalischen Medium keine Phosphorwasserstoffentwicklung ein, so dass dafür keine besonderen Vorsichtsmassnahmen erforderlich sind.

Das Wesen der erfindungsgemässen Arbeitsweise sei anhand des nachfolgenden Beispiels verdeutlicht, ohne die Erfindung auf den Inhalt dieses Beispiels beschränken zu wollen.

Beispiel In eine Reaktionstrommel mit einem Durchmesser von 0,8 m und einer Länge von 3 m, die im Inneren mit 6 Schikanen ausgerüstet ist, werden 1,6 t gebrochener Ferrophosphor ($< 10$ mm und einem Feinanteil von 3,8% $< 0,5$ mm) eingefüllt: Der Ferrophosphor hat die Zusammensetzung 22,9% P, 4,7% Si, 2,4% Ti, Rest Fe.

Die Trommel wird kontinuierlich bei einer Umdrehungszahl von 2 UpM mit 7 m$^3$/h 80–90 °C heisser Phosphorsäure folgender Zusammensetzung beschickt: 27,9% P$_2$O$_5$, 123 ppm V und 0,2% Fe gesamt mit einem Anteil an Fe$^{2+}$ von 0,02%. Die aus der Trommel ausgelaufene Phosphorsäure enthält 0,23% Fe-gesamt und 0,22% Fe$^{2+}$. Im Verlauf von 95 Stunden wurden 725 m$^3$ Säure der Reduktion zugeführt und in einem Lagerbehälter gesammelt. Die daraus hergestellte Dinatriumphosphatlösung enthält 18,5% P$_2$O$_5$ und 4,5 ppm Vanadin.

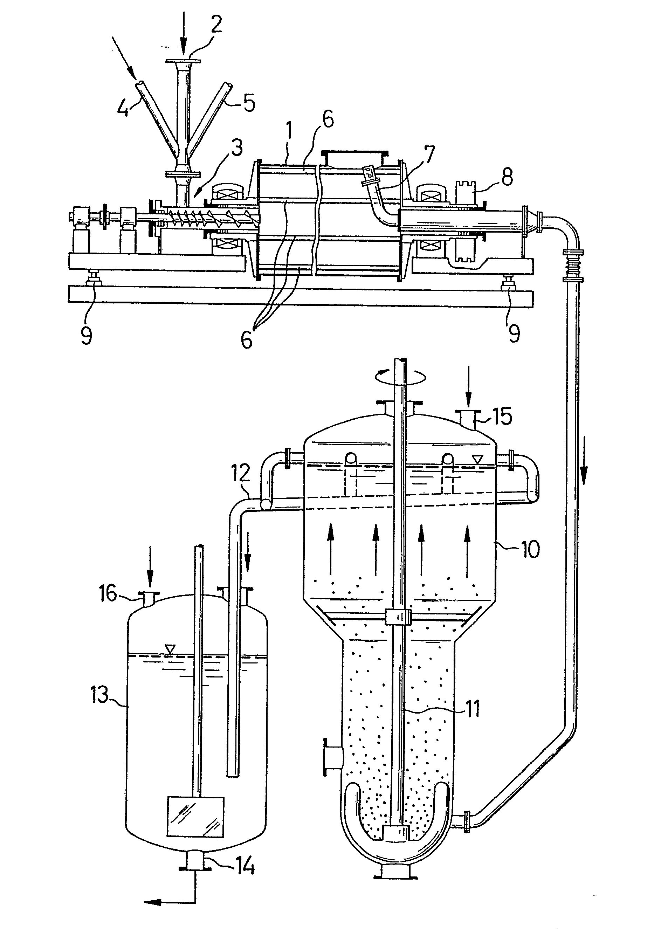

## Patentansprüche

1. Verfahren zur Reduktion von Eisen und Vanadium in phosphorsaurer Lösung mit Hilfe eines Reduktionsmittels, dadurch gekennzeichnet, dass man die eisen- und vanadiumhaltige phosphorsaure Lösung mit körnigem Ferrophosphor als Reduktionsmittel zur Reaktion bringt.

2. Verfahren nach Anspruch 1, dadurch gekennzeichnet, dass man Ferrophosphor einsetzt, der auf eine Korngrösse von 1 bis 10 mm gebrochen worden ist.

3. Verfahren nach Anspruch 1 oder 2, dadurch gekennzeichnet, dass man die Reduktion kontinuierlich durchführt, indem man die phosphorsaure Lösung einem um seine Querachse rotierenden Reaktor, der zum Teil mit dem Ferrophosphor gefüllt ist, kontinuierlich zu- und nach der Umsetzung die Lösung aus diesem Reaktor abführt.

4. Verfahren nach Anspruch 3, dadurch gekennzeichnet, dass man die phosphorsaure Lösung aus dem Reaktor in einen Behälter abführt, in welchem man den bei der Reaktion gebildeten feinteiligen Ferrophosphor nachreagieren und sich absetzen lässt.

5. Verfahren nach einem der Ansprüche 1 bis 4, dadurch gekennzeichnet, dass man den bei der Reaktion verbrauchten Ferrophosphor wieder ergänzt.

6. Verfahren nach einem der Ansprüche 1 bis 5, dadurch gekennzeichnet, dass man die Reaktion bei Temperaturen oberhalb 70 °C durchführt.

## Revendications

1. Procédé pour réduire le fer et le vanadium en solution phosphorique à l'aide d'un agent réducteur, caractérisé en ce que l'on fait réagir la solution phosphorique contenant du fer et du vanadium avec du ferrophosphore en grains qui sert d'agent réducteur.

2. Procédé selon la revendication 1, caractérisé en ce que l'on utilise un ferrophosphore qui a été broyé à une dimension de grain de 1 à 10 mm.

3. Procédé selon la revendication 1 ou 2, caractérisé en ce qu'on effectue la réduction en continu en envoyant en continu la solution phosphorique dans un réacteur tournant autour de son axe transversal, garni en partie de ferrophosphore, et en évacuant en continu la solution de ce réacteur après la réaction.

4. Procédé selon la revendication 3, caractérisé en ce que l'on évacue la solution phosphorique du réacteur dans un récipient dans lequel le ferrophosphore en fines particules formé dans la réaction continue de réagir et sédimente.

5. Procédé selon l'une des revendications 1 à 4, caractérisé en ce que l'on complète le ferrophosphore consommé dans la réaction.

6. Procédé selon l'une des revendications 1 à 5, caractérisé en ce que l'on effectue la réaction à des températures supérieures à 70 °C.

**Claims**

1. A process for reducing iron and vanadium in phosphoric acid solution with the aid of a reducing agent, which comprises reacting the iron- and vanadium-containing phosphoric acid solution with granular ferrophosphorus as reducing agent.

2. The process as claimed in claim 1, wherein ferrophosphorus which has been comminuted to a grain size from 1 to 10 mm is employed.

3. The process as claimed in claim 1 or 2, wherein thethe reduction is carried out continuously by continuously feeding the phosphoric acid solution to a reactor which is rotating about its transverse axis and is partly filled with the ferrophosphorus, and continuously discharging the solution out of this reactor when the reaction is complete.

4. The process as claimed in claim 3, wherein the phosphoric acid solution is discharged from the reactor into a tank in which the finely divided ferrophosphorus formed during the reaction is allowed to react further and settle.

5. The process as claimed in any one of claims 1 to 4, wherein the ferrophosphorus consumed in the reaction is replenished.

6. The process as claimed in any one of claims 1 to 5, wherein the reaction is carried out at temperatures above 70 °C.

## 1/1